# EUROPÄISCHE PATENTSCHRIFT

(11) **EP 4 279 225 B1**
(45) Veröffentlichungstag und Bekanntmachung des Hinweises auf die Patenterteilung: **29.01.2025**
(21) Anmeldenummer: 22187200.5
(22) Anmeldetag: 27.07.2022
(51) Int. Cl.: B25J 9/00, B25J 19/02, B25J 5/00, B25J 11/00, B25J 13/08, B25J 9/16

(54) **VERFAHREN ZUR KALIBRIERUNG EINES BAUROBOTERS**
METHOD FOR CALIBRATING A CONSTRUCTION ROBOT
PROCÉDÉ D'ÉTALONNAGE D'UN ROBOT DE CONSTRUCTION

(30) Priorität: 19.05.2022 EP 22174203
(43) Veröffentlichungstag der Anmeldung: 22.11.2023
(73) Patentinhaber: Hilti Aktiengesellschaft, 9494 Schaan (LI)
(72) Erfinder: Brugger, Peter, 6800 Feldkirch (AT); Zanona, Julia, 6800 Feldkirch (AT)
(74) Vertreter: Hilti Aktiengesellschaft Corporate Intellectual Property

(56) Entgegenhaltungen:
- EP-A1- 2 292 387
- DE-A1- 102009 042 014
- US-A1- 2021 323 163
- MOLDAGALIEVA AKMARAL ET AL: "Computer Vision-Based Pose Estimation of Tensegrity Robots Using Fiducial Markers", 2019 IEEE/SICE INTERNATIONAL SYMPOSIUM ON SYSTEM INTEGRATION (SII), IEEE, 14 January 2019 (2019-01-14), pages 478 - 483, XP033543290, DOI: 10.1109/SII.2019.8700452

## Beschreibung

Die Erfindung betrifft ein Verfahren zur Kalibrierung eines Bauroboters. Ein solcher Bauroboter ist beispielsweise aus DE 10 2009 042014 A1 bekannt.

Bauarbeiten auf Baustellen sind oftmals mit einer hohen Positionsgenauigkeit auszuführen. Beispielsweise sind Bohrungen an Decken häufig mit Positionsgenauigkeiten von 0,5 cm oder besser auszuführen, damit beispielsweise an den Decken anzuordnende Deckenelemente an den Bohrungen ordnungsgemäß fixiert werden können.

Um derartige Positionsgenauigkeiten mit einem Bauroboter zu erreichen, der mit Hilfe eines Manipulators eine solche Bauarbeit ausführen soll, sollte der Manipulator ebenfalls mit hoher Präzision steuerbar sein. Insbesondere sollten Bewegungen des Manipulators relativ zu einer mobilen Plattform des Bauroboters präzise und insbesondere in vorhersehbarer Weise steuerbar sein. Üblicherweise weist der Manipulator Stellglieder auf, beispielsweise Schrittmotoren, mit denen eine gewünschte Stellung des Manipulators angefahren werden kann. Aufgrund von Fertigungstoleranzen kann es dabei jedoch zu systematischen, für den jeweiligen Manipulator spezifischen Abweichungen zwischen der gewünschten und der tatsächlich angefahrenen Stellung, jeweils relativ zur Position und Lage der mobilen Plattform gemessen, kommen. Vor einem ersten Einsatz eines Bauroboters bzw. seines Manipulators wird daher bislang der Manipulator kalibriert, insbesondere werden Kalibrierungsdaten zur Kalibrierung von Stellbewegungen des Manipulators erzeugt, aus denen später Korrekturinformationen abgeleitet werden, um spätere Stellbewegungen entsprechend zu korrigieren.

Bislang erfolgt die Kalibrierung, indem ein geeichtes Duplikat des zu kalibrierenden Manipulators mit dem Manipulator verbunden wird. Während des Abfahrens mehrerer Stellungen werden jeweils die vom Manipulator und dem Duplikat ermittelten Positions- und Lagedaten erfasst und miteinander verglichen.

Diese Methode erfordert jedoch ein solches geeichtes Duplikat, wodurch sich die Kosten für die Kalibrierung erheblich erhöhen. Auch kann die Kalibrierung nur am Standort des Duplikats, in der Regel eine Fertigungsstätte oder eine Reparaturwerkstätte, nicht aber eine Baustelle, auf der der Bauroboter eingesetzt werden soll, erfolgen. Wenn beispielsweise in Folge von Beschädigungen oder von Abnutzung der Manipulator zu erneuern ist, kann ein solcher Austausch aufgrund der Kalibrierung zudem in der Regel nicht direkt vor Ort erfolgen.

Aufgabe der vorliegenden Erfindung ist es ein Verfahren zur Kalibrierung eines Bauroboters vorgestellt werden, durch das ein Bauroboter auf besonders einfache und kostengünstige Weise, auch vor Ort, kalibrierbar ist.

Der durch das Verfahren zu kalibrierende Bauroboter zur Ausführung einer Bauarbeit an einem Baustellenobjekt umfasst eine mobile Plattform und einen relativ zur mobilen Plattform beweglichen Manipulator, und eine zumindest teilweise an der mobilen Plattform angeordnete und / oder ausgebildete optische Sensorik und eine Steuereinheit, die eingerichtet ist, unter Verwendung der optischen Sensorik eine Position und / oder eine Lage des Manipulators, insbesondere eines am Manipulator angeordneten Werkzeugs, relativ zur mobilen Plattform zu bestimmen..

Durch Verwendung einer optischen Sensorik können Stellungen auch eines noch unkalibrierten Manipulators weitgehend frei von, insbesondere mechanisch bedingten, Fertigungstoleranzen bestimmt werden. Durch zumindest teilweise Anordnung der optischen Sensorik an der mobilen Plattform können diese Stellungen an beliebigen Orten bestimmt werden.

Externe Zusatzgeräte, insbesondere geeichte Duplikate, sind nicht erforderlich. Somit kann beispielsweise ein Ersatz-Manipulator auch direkt vor Ort auf einer Baustelle, auf der der zugehörige Bauroboter eingesetzt werden soll, kalibriert werden.

Die Kalibrierung kann somit mit stets verfügbaren Bordmitteln erfolgen. Insofern kann ein solcher Bauroboter auch als kalibrationsfreier Bauroboter, insbesondere im Sinne, dass es einer Kalibration mit externen Zusatzgeräten nicht bedarf, verstanden werden.

Ein Vorteil des Bauroboters ist es, dass dieser eine Position und / oder Lage des Manipulators, insbesondere des Werkzeugs, relativ zur mobilen Plattform selbsttätig und unabhängig von mechanischen Eigenschaften des Manipulators ermitteln kann. Wird somit der Manipulator getauscht, bedarf es keiner Kalibrierung mit Zusatzgeräten oder allenfalls weniger Kalibrierungsmaßnahmen, um das Werkzeug mit dem ausgetauschten Manipulator präzise an gewünschte Positionen zu steuern. Auch kann, beispielsweise in einer Rückkoppelungsschleife, der Manipulator bewegt werden und die erreichte Position des Manipulators und / oder des Werkzeugs mit Hilfe der Sensorik relativ zur mobilen Plattform bestimmt werden. Weicht die erreichte Position von einer Sollposition ab, kann eine Korrekturbewegung des Manipulators wiederholt erfolgen, bis die Sollposition erreicht ist.

Unter einer optischen Sensorik kann dabei eine Sensorik verstanden werden, die auf einer Detektion elektromagnetischer Wellen basiert. Denkbar ist beispielsweise eine Sensorik, die auf sichtbarem und / oder infrarotem Licht und / oder auf Mikrowellen basiert.

Der Bauroboter kann einen Endeffektor aufweisen. Der Endeffektor kann wenigstens ein Werkzeug oder eine Werkzeugaufnahme zur Aufnahme eines Werkzeugs aufweisen. Der Endeffektor und die mobile Plattform können über den Manipulator miteinander verbunden sein. Insbesondere kann am Endeffektor eine Werkzeugschnittstelle zur Halterung des Werkzeugs und / oder zur Energieübertragung und / oder zur Datenübertragung von und / oder zum Werkzeug angeordnet und / oder ausgebildet sein.

Unter einem Werkzeug kann ein Einsatzwerkzeug wie beispielsweise ein Markierwerkzeug, ein Bohrer, ein Meißel, ein Sägeblatt oder ein Schleifwerkzeug, verstanden werden. Es kann alternativ oder ergänzend auch unter einem Werkzeug eine Werkzeugmaschine, insbesondere eingerichtet zur Aufnahme und / oder Nutzung eines Werkzeugs, beispielsweise eine Markiermaschine, beispielsweise eine steuerbare Farbsprühdüse, eine Bohrmaschine, insbesondere eine Gesteinsbohrmaschine, beispielsweise ein Bohrhammer, eine Meißelmaschine, eine Schleifmaschine oder dergleichen, verstanden werden.

Die optische Sensorik kann mehrteilig ausgebildet sein. Insbesondere kann sich ein Teil am Manipulator, am Endeffektor und / oder am Werkzeug befinden. Wenigstens ein anderer Teil kann sich an der mobilen Plattform befinden. So kann die optische Sensorik besonders einfach eingerichtet sein, die Stellung des Manipulators anhand des erstgenannten Teils mit hoher Präzision relativ zur mobilen Plattform, entsprechend dem wenigstens einen anderen Teil, zu bestimmen.

Die optische Sensorik kann beispielsweise einen Laserdistanzmesser umfassen. Sie kann alternativ oder ergänzend wenigstens eine Bildaufnahmeeinheit umfassen. Beispielsweise kann die Bildaufnahmeeinheit eine Schwarzweiß- und / oder eine Farbbildkamera umfassen.

Ergänzend zur optischen Sensorik kann der Bauroboter eine nichtoptische Sensorik aufweisen. Die Steuereinheit kann dann eingerichtet sein, eine Position und / oder eine Lage des Manipulators, insbesondere eines am Manipulator angeordneten Werkzeugs, unter Verwendung der nichtoptischen Sensorik relativ zur mobilen Plattform zu bestimmen. Dann ist zumindest temporär eine Stellungsbestimmung auch möglich, wenn beispielsweise kein freier Sichtkontakt zwischen verschiedenen Teilen der optischen Sensorik besteht. Die nichtoptische Sensorik kann beispielsweise eine mechanische Sensorik sein. Sie kann zum Beispiel eingerichtet sein, Stellungen einzelner Gelenke des Manipulators zu bestimmen. Sie kann dazu wenigstens einen propriozeptiven Sensor umfassen.

Weist der Bauroboter einen Lagesensor zur Erfassung einer Lage des Bauroboters auf, beispielsweise in Form eines Beschleunigungssensors, können zusätzlich Neigungswinkel des Bauroboters relativ zu einem Untergrund, auf dem sich der Bauroboter befindet, und / oder relativ zur Horizontalen bestimmt werden. Somit lässt sich eine Arbeitsposition, beispielsweise eine zu erreichende Bohrposition an einer Wand oder einer Decke, mit dem Manipulator und insbesondere mit dem Werkzeug noch genauer anfahren, da eventuelle Kippmomente, insbesondere bei weiter Streckung des Manipulators, relativ zum Untergrund und / oder zur Horizontalen bestimmt und kompensiert werden können.

Dazu kann der Lagesensor eingerichtet sein, eine Lage der mobilen Plattform und / oder des Manipulators, insbesondere des Endeffektors, beispielsweise relativ zu einer Horizontalen und / oder einer Vertikalen, zu bestimmen. Dementsprechend kann er an der mobilen Plattform und / oder am Manipulator, insbesondere am Endeffektor, angeordnet sein.

Der Lagesensor kann beispielsweise einen Beschleunigungssensor sein und / oder einen solchen aufweisen. Der Beschleunigungssensor kann insbesondere am Endeffektor und / oder an der mobilen Plattform ausgebildet sein. Der Beschleunigungssensor kann eingerichtet sein, Beschleunigungen entlang wenigstens einer Richtung, vorzugsweise zweidimensional, besonders bevorzugt dreidimensional, zu erfassen.

Durch die Sensorik und / oder den Beschleunigungssensor erfasste Änderungen der Position und / oder Lage können durch eine Stellvorrichtung des Bauroboters kompensierbar sein.

Am Bauroboter, insbesondere am Endeffektor und / oder am Manipulator, kann eine Lokalisationskennzeichnung, beispielsweise in Form einer AruCo-Markierung, angeordnet und / oder ausgebildet sein. Insbesondere kann die optische Sensorik die Lokalisationskennzeichnung umfassen.

Beispielsweise die Bildaufnahmeeinheit kann dann berührungslos und mit hoher Frequenz die Position und / oder Lage, insbesondere mit hoher Genauigkeit, erfassen. Dazu kann die Steuereinheit durch Bildverarbeitung von mit der Bildaufnahmeeinheit aufgenommenen Bildern die Lokalisationskennzeichnung identifizieren und lokalisieren.

Insgesamt kann eine solche optische Sensorik ein geringes Gewicht aufweisen. Insbesondere die Lokalisationskennzeichnung kann ein geringes Gewicht aufweisen, sodass am Manipulator bzw. am Endeffektor durch die optische Sensorik nur geringe Zusatzlasten wirken. Eine solche optische Sensorik kann auch besonders kostengünstig sein, da auf kostenrelevante Präzisionselemente wie beispielsweise Präzisionswinkelmesseinheiten oder LIDAR-Scanner verzichtet werden kann.

Um eine kontinuierliche Überwachung der Position und / oder Lage zu ermöglichen, kann die Lokalisationskennzeichnung zumindest teilweise, vorzugsweise vollständig, in einem Sichtfeld der Bildaufnahmeeinheit angeordnet sein.

Der Manipulator kann wenigstens drei, bevorzugt wenigstens sechs, Freiheitsgrade aufweisen. Die Freiheitsgrade können insbesondere relativ zur mobilen Plattform bestehen. Wenigstens drei Freiheitsgrade ermöglichen es - ohne Schwenken der mobilen Plattform von der Vertikalen in die Horizontale oder umgekehrt - an Decken oder Wänden zu arbeiten. Mit sechs Freiheitsgraden kann ohne Schwenken der mobilen Plattform sowohl an Decken als auch an Wänden gearbeitet werden. Auch können dadurch Bauarbeiten an sonst schwer erreichbaren Positionen, beispielsweise wenn ansonsten bei weniger Freiheitsgraden durch Installationselemente wie beispielsweise Leitungen oder Kabelführungen der Weg zur gewünschten Position versperrt wäre, ausgeführt werden.

Der Endeffektor kann zusätzlich weitere Freiheitsgrade bieten. Beispielsweise kann am Endeffektor ein teleskopierbares Element angeordnet sein, mit dem beispielsweise das Werkzeug relativ zum Endeffektor bewegbar ist.

Das Werkzeug kann beispielsweise ein Markierwerkzeug, ein Bohrwerkzeug, ein Meißelwerkzeug, ein Schleifwerkzeug und / oder ein Schneidwerkzeug, insbesondere ein Sägeblatt, sein und / oder umfassen.

Allgemein kann der Bauroboter zur Ausführung von Arbeiten im Hoch-Tiefbau und / oder Anlagenbau eingerichtet sein. Gerade bei derartigen Baustellen ist oftmals eine Vor-Ort-Kalibrierung besonders wichtig, jedoch bislang nur sehr schwierig durchführbar.

Bauarbeiten in besonders großen Höhen, insbesondere an Decken von Hallen, können ermöglicht werden, wenn die mobile Plattform eine Flugplattform ist. Die Flugplattform kann eine Drohne sein. Sie kann wenigstens einen Propeller aufweisen. Dabei kann Fliegen auch Schweben in der Luft umfassen.

Die mobile Plattform kann zur kabelgebundenen und / oder zur kabelungebundenen Ausführung von Bauarbeiten eingerichtet sein. Beispielsweise kann sie während eines Betriebes an eine Versorgungsleitung angeschlossen sein. Alternativ oder ergänzend kann sie auch einen Akkumulator, insbesondere Lithium-basiert, aufweisen. Denkbar ist auch, dass die mobile Plattform eine Brennstoffzelle aufweist.

Alternativ oder ergänzend ist auch denkbar, dass die mobile Plattform eine fahrbare Plattform, beispielsweise ein Kettenfahrzeug und / oder ein Räderfahrzeug, umfasst und / oder als solche ausgebildet ist.

Zur Vergrößerung ihrer Reichweite in der Vertikalen kann die mobile Plattform, insbesondere wenn sie als fahrbare Plattform ausgebildet ist, eine Hubvorrichtung aufweisen.

Der Bauroboter, insbesondere der Endeffektor kann einen Laserdistanzmesser aufweisen. In diesem Fall kann auf der Baustelle wenigstens eine Positionsmarkierung, angeordnet sein, sodass eine Position und / oder Lage des Bauroboters relativ zur Positionsmarkierung, bevorzugt zu mehreren Positionsmarkierungen, bestimmbar ist. Alternativ oder ergänzend kann er eingerichtet sein, von einer Totalstation zur Bestimmung seiner Position und / oder Lage erfasst zu werden. Dazu kann der Bauroboter beispielsweise einen Reflektor, zum Beispiel in Form eines Prismas, aufweisen. Somit kann eine Position und / oder eine Stellung des Bauroboters, insbesondere eine Position und / oder eine Lage, relativ zu einem absoluten Bezugssystem der Baustelle und / oder der Totalstation bzw. der wenigstens einen Positionsmarkierung, ermittelt werden.

Aufgrund von Verdeckungen befinden sich Arbeitspositionen, an denen die Bauarbeit ausgeführt werden soll und zu denen daher das Werkzeug oder zumindest eine Spitze des Werkzeugs zu bringen ist, oftmals nicht im Sichtbereich der Totalstation. Daher kann der Reflektor beziehungsweise der Laserdistanzmesser an der mobilen Plattform angeordnet sein, zu der oftmals eher eine Sichtverbindung herstellbar ist. Somit ist dann zumindest eine Position und / oder Lage der mobilen Plattform erfassbar und darüber bei Kenntnis des relativen Versatzes der mobilen Plattform zum Endeffektor, insbesondere zur Spitze des Werkzeugs, auch eine Position und / oder Lage des Endeffektors, insbesondere eine Position und / oder Lage der Spitze des Werkzeugs, ermittelbar.

Die Aufgabe wird gelöst durch ein **Verfahren zur Kalibrierung eines Bauroboters** der vorangehend und / oder nachfolgend beschriebenen Art, wobei Kalibrierungsdaten zur Kalibrierung von Stellbewegungen des Manipulators erzeugt werden, in dem der Manipulator in wenigstens eine erste und anschließend in eine zweite Stellung gebracht wird, und bei Erreichen der jeweiligen Stellung jeweils wenigstens eine Position und / oder Lage des Manipulators, insbesondere eines am Manipulator angeordneten Werkzeugs, relativ zur mobilen Plattform, unter Verwendung der zumindest teilweise an der mobilen Plattform des Bauroboters angeordneten und / oder ausgebildeten optischen Sensorik bestimmt werden.

Da zur Ausführung des Verfahrens lediglich Bordmittel benötigt werden, kann der Bauroboter verfahrensgemäß auch vor Ort, beispielsweise auf einer Baustelle, kalibriert werden. Es werden keine besonders kostenintensiven Bauteile benötigt, sodass das Verfahren besonders kostengünstig ausgeführt werden kann.

Bei einer Variante des Verfahrens kann wenigstens eine der Positionen und / oder Lagen bestimmt werden, indem erste Bilddaten einer am Manipulator angeordneten und / oder ausgebildeten Lokalisationskennzeichnung und zweite Bilddaten einer in einer Umgebung des Bauroboters angeordneten und / ausgebildeten externen Lokalisationskennzeichnung aufgezeichnetund ausgewertet werden. Die ersten und zweiten Bilddaten können insbesondere von der mobilen Plattform aus aufgezeichnetwerden, beispielsweise wenn die Bildaufnahmeeinheit an der mobilen Plattform angeordnet und / oder ausgebildet ist. Vorzugsweise ist die externe Lokalisationskennzeichnung zumindest temporär, insbesondere während einer laufenden Kalibrierung, relativ zur Umgebung ortsfest ruhend angeordnet.

Die zusätzliche Nutzung der zweiten Bilddaten ermöglicht es insbesondere auch, Kippbewegungen des gesamten Bauroboters relativ zur Umgebung und Abhängig von den Bewegungen des Manipulators, insbesondere abhängig von seiner jeweiligen Streckung, zu erfassen. Insofern kann auf diese Weise die Nutzung eines Lagesensors ergänzt oder ersetzt werden.

Weiter ist denkbar, dass die anzufahrenden Stellungen bestimmten Positionen des Manipulators und / oder des Werkzeugs relativ zur externen Lokalisationskennzeichnung entsprechen.

Denkbar ist beispielsweise, dass eine Werkzeugspitze bestimmte Positionen auf der externen Lokalisationskennzeichnung berühren soll. Aus der Kenntnis des Aussehens der Lokalisationskennzeichnung in Verbindung mit den zweiten Bilddaten kann dann auf besonders einfache und wenig rechenaufwändige Weise eine Bildverarbeitung erfolgen. Die Positionen und / oder Lagen der jeweiligen Stellungen und insbesondere Abweichungen dieser Positionen und / oder Lagen von Sollwerten lassen sich dadurch mit besonders hoher Präzision erfolgen.

Um technische Anforderungen an beispielsweise die Bildaufnahmeeinheit gering zu halten,

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können.

In der schematischen Zeichnung sind Ausführungsbeispiele der Erfindung dargestellt und in der nachfolgenden Beschreibung näher erläutert.

### Es zeigen:

- Fig. 1: einen Bauroboter mit einer Flugplattform, der an einer Decke eine Bauaufgabe ausführt,
- Fig. 2: eine Endeffektor-Plattform des Bauroboters,
- Fig. 3: eine Lokalisationskennzeichnung,
- Fig. 4: einen Bauroboter mit einer fahrbaren Plattform,
- Fig. 5: einen weiteren Bauroboter mit einer fahrbaren Plattform und
- Fig. 6: ein Verfahren zur Kalibrierung eines Bauroboters.

In der nachfolgenden Beschreibung der Figuren werden zur Erleichterung des Verständnisses der Erfindung für gleiche oder sich funktional entsprechende Elemente jeweils die gleichen Bezugszeichen verwendet.

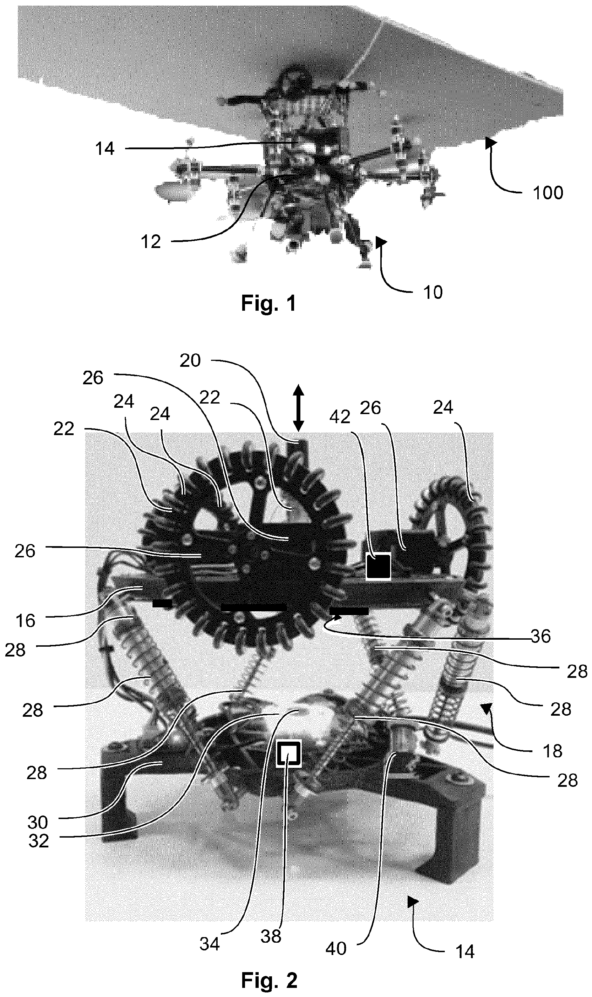

**Fig. 1** zeigt einen Bauroboter **10**, der an einer Decke **100**, also an einem Baustellenobjekt, eines im Bau befindlichen Gebäudes, insbesondere auf einer in dem Gebäude befindlichen Baustelle, eine Bauaufgabe ausführt. Die Bauaufgabe besteht darin, Markierungen entsprechend vorliegenden CAD-Planungsdaten an der Unterseite der Decke 100 zu markieren.

Der Bauroboter 10 ist als Drohne, d. h. als unbemanntes Flugobjekt, ausgebildet. Dazu weist er eine mobile Plattform **12** in Form eines Hexakopters auf. An der mobilen Plattform 12 ist eine Endeffektor-Plattform **14** angeordnet.

**Fig. 2** zeigt die Endeffektor-Plattform 14 in einer perspektivischen Ansicht von der Seite.

Die Endeffektor-Plattform 14 umfasst einen Endeffektor **16.** Der Endeffektor 16 ist über einen Manipulator **18,** insbesondere einen Parallelmanipulator, des Bauroboters 10 mit der mobilen Plattform 12 verbunden.

Der Bauroboter 10 ist eingerichtet, Markierungen gemäß an den Bauroboter 10 übermittelten CAD-Daten auf der Decke 100 zu markieren. Dazu weist der Endeffektor 16 einen Markierstift **20** auf.

Der Markierstift 20 ist auf einer Hubvorrichtung **22** angeordnet. Somit kann der Markierstift 20 in der in Fig. 1 dargestellten Stellung des Bauroboters 10 zur Decke 100 hin und / oder von dieser weg bewegt werden, insbesondere ohne die Endeffektor-Plattform 14 insgesamt bewegen zu müssen. Diese Bewegungsmöglichkeit ist in Fig. 2 mit einem Doppelpfeil symbolisiert.

Der Markierstift 20 ist als Farbstift ausgebildet, sodass er eine Farbmarkierung auf die Decke 100 aufbringen kann, sobald er die Decke 100 berührt. Um einen adäquaten Farbauftrag zu ermöglichen und den Markierstift 20 vor zu großen mechanischen Belastungen zu schützen, kann der Markierstift 20 federnd, beispielsweise mittels eines Schaummaterials und / oder eines Metallelements, an der Hubvorrichtung 22 angeordnet sein. Der Markierstift 20 stellt somit ein Markierwerkzeug dar, das in einer Werkzeugaufnahme (in der Darstellung gemäß Fig. 2 nicht sichtbar), die wiederum an der Hubvorrichtung 22 angeordnet ist, aufgenommen ist.

Der Endeffektor 16 weist ferner drei Kontaktelemente **24** auf. Die Kontaktelemente 24 sind als Räder, insbesondere als omnidirektionale Räder, ausgebildet. Wie insbesondere auch anhand von Fig. 1 erkennbar ist, kontaktieren die Kontaktelemente 24 während der Ausführung der Bauaufgabe, also während des Markierens der Decke 100, die Decke 100. Sie sind durch Motoren **26** jeweils einzeln antreibbar. Somit lässt sich der Endeffektor 16 mit Hilfe der motorisch antreibbaren Kontaktelemente 24, also in diesem Ausführungsbeispiel mit Hilfe der omnidirektionalen Räder, entlang der Decke 100 (Fig. 1) zumindest entlang zweier Dimensionen bewegen.

Der Manipulator 18 ist als Hexapod ausgebildet. Er weist sechs Stützarme **28** auf. Die Stützarme 28 sind in diesem Ausführungsbeispiel nicht angetrieben, sind aber an Lagerstellen des Endeffektors 16 einerseits sowie an Lagerstellen einer unter dem Endeffektor 16 befindlichen Befestigungsvorrichtung **30** drehbar gelagert. Somit ist der Endeffektor 16 relativ beweglich zur Befestigungsvorrichtung 30, insbesondere mit wenigstens 6 Freiheitsgraden, bewegbar, aber dennoch durch die Stützarme 28 gestützt. Der Manipulator 18 ist somit als passives System ausgebildet.

Die Stützarme 28 sind als, insbesondere fluid-gedämpfte, Stoßdämpfer ausgebildet. Zur Dämpfung weisen sie einen fluid-befüllten, insbesondere mit Wasser befüllten, Kolben sowie außenseitig angeordnete Federelemente auf. Die Kolben zusammen mit den jeweiligen Federelementen bilden somit Dämpfungselemente. Zusätzlich sorgen die Federelemente bei Auslenkung des Endeffektors 16 relativ zur Befestigungsvorrichtung 30 aus einer Ruhelage heraus für eine selbsttätige Rückstellung in die Ruhelage. Die Federhärten der Stützarme 28 können dabei so eingestellt sein, dass sie durch das Eigengewicht des Endeffektors 16 oder, alternativ, durch das Eigengewicht des Endeffektors 16 zuzüglich einer zu erwarteten Zusatzlastkraft, beispielsweise 15 N, in der Ruhelage in etwa bis zur Hälfte der Gesamtlänge der Stützarme 28 eingefahren sind. Sie können ausgehend von der Ruhelage so eingerichtet sein, dass der Endeffektor 16 hinreichend weit bewegbar ist, beispielsweise um jeweils 2 bis 4 cm in einer x- und einer y-Richtung einer zum Endeffektor 16 parallelen Ebene, sein.

Die Stützarme 28 sind derart angeordnet, dass sich die Endeffektor-Plattform 14 in der Ruhelage in einem stabilen Zustand befindet. Insbesondere sind die Stützarme 28 derart angeordnet, dass der Endeffektor 16 nicht von selbst zu einer Seite hin abkippt.

Für eine derartige stabile Ruhelage geeignete Positionen und / oder Lagen für die Stützarme 28 lassen sich finden, indem eine Gesamtenergiebilanz der Anordnung, insbesondere umfassend eine Lageenergie des Endeffektors sowie gegebenenfalls der Stützarme 28 in Abhängigkeit von seiner bzw. deren Position und / oder Lage sowie eine Spannenergie der Federelemente der Stützarme 28, erstellt wird und ein möglichst globales, mindestens jedoch lokales Minimum der Gesamtenergie in Abhängigkeit von der Positionierung und / oder Ausrichtung der Stützarme 28 gesucht wird.

Die Befestigungsvorrichtung 30 dient zur Befestigung der Endeffektor-Plattform 14 an der mobilen Plattform 12 (siehe Fig. 1). Die Befestigung kann lösbar ausgebildet sein, sodass die Endeffektor-Plattform 14 auch nachträglich noch auf anderen mobilen Plattformen, beispielsweise Octakoptern oder auf einer bodengestützten mobilen Plattform, beispielsweise einem Räder- und / oder Kettenfahrwerk, montierbar ist.

Die Befestigungsvorrichtung 30 bildet eine untere Eben unterhalb des Endeffektors 16. Sie weist eine Beleuchtung **32** sowie eine Kamera **34** auf. Die Kamera 34 ist eine Bildaufnahmeeinheit. Die Beleuchtung 32 und die Kamera 34 sind nach oben hin, also auf die Unterseite des Endeffektors 16 hin, ausgerichtet. An der Unterseite des Endeffektors 16, insbesondere im Sichtfeld der Kamera 34, befindet sich eine Lokalisationskennzeichnung **36.**

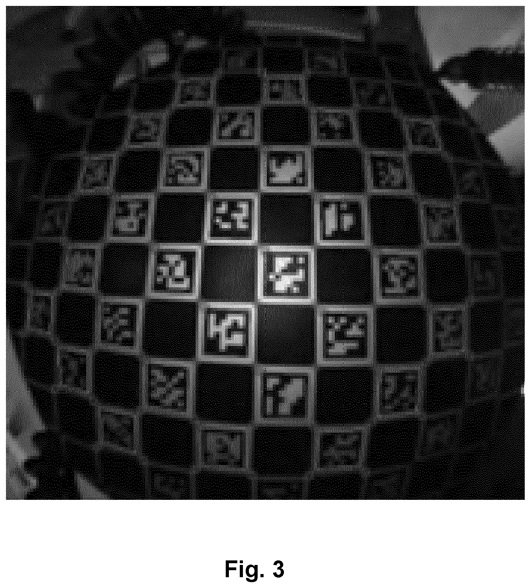

**Fig. 3** zeigt beispielhaft ein von der Kamera 34 aufgezeichnetes Bild der Lokalisationskennzeichnung 36. Die Lokalisationskennzeichnung 36 weist ein Schachbrettartiges Muster von Passermarken, beispielsweise in Form von ArUco-Markierungen, auf. Andere Ausführungen der Lokalisationskennzeichnung sind auch denkbar. Vorzugsweise sollte die Lokalisationskennzeichnung derart gestaltet sein, dass sie selbst mit hoher Sensitivität und Spezifität identifizierbar und insbesondere von einer Umgebung wie sie auf Baustellen typisch ist, unterscheidbar ist. Zudem sollte sie vorzugsweise zumindest eine gut identifizierbare Strecke bekannter Länge aufweisen, sodass zumindest diese Strecke zur Kalibrierung von Distanzschätzungen genutzt werden kann. Allgemein sollte die Lokalisationskennzeichnung durch Bildverarbeitung identifizierbar und lokalisierbar sein. Vorzugsweise weist die Lokalisationskennzeichnung wenigstens ein zweidimensionales Muster auf, sodass ihre Lage oder Orientierung im Raum ebenfalls durch Bildverarbeitung bestimmbar ist. Demgemäß ist auch denkbar, dass als Lokalisationskennzeichnung ein mitbewegter, sichtbar angeordneter Teil des Manipulators und / oder des Werkzeugs als Lokalisationskennzeichnung verwendet wird, sofern dessen Gestalt, insbesondere wenigstens eine Abmessung, bekannt und konstant ist und das Teil die vorangehend genannten Anforderungen an seine Identifizierbarkeit und Lokalisierbarkeit erfüllt.

Eine Steuereinheit **38,** in Fig. 2 schematisch dargestellt, ist eingerichtet, von der Kamera 34 aufgenommene Bilder auszuwerten und durch Bildverarbeitung aus Art, Größe, Lage und / oder Position von erkannten Elementen Lokalisationskennzeichnung, hier beispielsweise die Passermarken, eine Position und / oder Lage des Endeffektors 16 relativ zur Befestigungsvorrichtung 30 zu ermitteln.

Weiter ist an der Befestigungsvorrichtung 30 ein Reflexionselement **40** angeordnet, das eingerichtet ist, beispielsweise von einer, insbesondere außerhalb des Bauroboters 10 befindlichen, Totalstation erfasst zu werden, sodass die Position und / oder Lage des Reflexionselements 40 und damit die Position und / oder die Lage der Befestigungsvorrichtung 30 relativ zu einem umgebungsbezogenen Ursprung ermittelbar ist.

Die Steuereinheit 38 kann eingerichtet sein, von einer solchen Totalstation Positions- und / oder Lagedaten zu erhalten und daraus in Verbindung mit der ermittelten relativen Position und / oder Lage des Endeffektors 16 relativ zur Befestigungsvorrichtung 30 eine absolute Position und / oder Lage des Endeffektors 16 und damit auch unter Berücksichtigung der Stellung der Hubvorrichtung 22 eine Position und / oder Lage des Markierstifts 20 relativ zur Totalstation, zur Decke 100 und / oder zu einem anderen ortsfesten Bezugssystem der Baustelle zu ermitteln.

Die Steuereinheit 38 kann einen Mikrocontroller umfassen. Sie kann insbesondere einen Mikroprozessor und auf dem Mikroprozessor ausführbaren, in einer Speichereinheit der Steuereinheit 38 gespeicherten, Programmcode aufweisen.

Um eine möglichst weitgehende Autarkie der Endeffektor-Plattform 14 zu erreichen, kann die Endeffektor-Plattform 14 noch eine von der mobilen Plattform 12 unabhängige Energiequelle, beispielsweise einen wiederaufladbaren Akkumulator, aufweisen.

Die Steuereinheit 38, die Kamera 34 sowie die Lokalisationskennzeichnung 36 bilden eine optische Sensorik, die eingerichtet ist, eine Position und / oder Stellung des Endeffektors 16 relativ zur mobilen Plattform 12 zu erfassen.

Der Endeffektor 16 kann ferner einen, beispielsweise dreidimensional messenden, Beschleunigungssensor **42** aufweisen (in Fig. 2 lediglich schematisch dargestellt). Somit können Beschleunigungen des Endeffektors 16 gemessen werden. Mit Hilfe der gemessenen Beschleunigungen kann die Ermittlung der Position und / oder Lage des Endeffektors 16 und damit des Markierstifts 20, insbesondere durch die Steuereinheit 38, weiter verbessert werden.

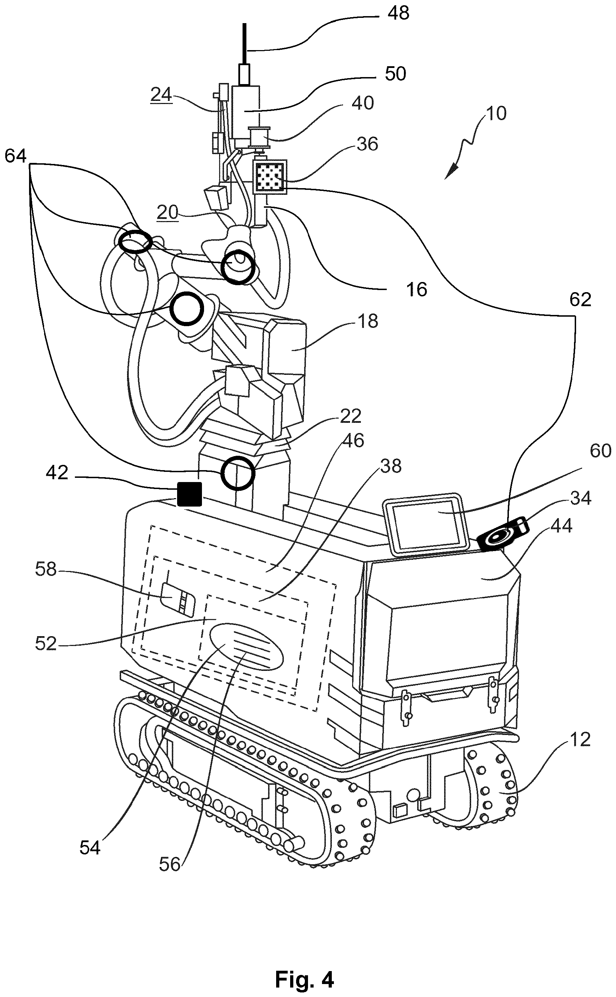

**Fig. 4** zeigt einen weiteren Bauroboter 10. Bei diesem Ausführungsbeispiel weist der Bauroboter 10 eine mobile Plattform 12 in Form einer fahrbaren Plattform, insbesondere ein als Kettenfahrwerk ausgebildetes Fahrwerk, auf.

In einem Gehäuse **44** ist ein (in Fig. 4 lediglich schematisch darstellbarer) Steuerraum **46** ausgebildet. Oberseitig des Gehäuses 44 befindet sich ein Manipulator 18. Der Manipulator 18 ist als multiaxial steuerbarer Arm ausgebildet, an dessen freien Ende ein Endeffektor 16 mit einem Werkzeug, insbesondere in Form einer Bohrwerkzeugmaschine **48** und einer Staubabsaugungsvorrichtung **50,** angeordnet ist. Zur Vergrößerung der Reichweite weist der Manipulator 18 eine Hubvorrichtung 22 auf, mit der der übrige Teil des Manipulators 18 vertikal verlagerbar ist.

Der Bauroboter 10 ist nicht auf diese Ausgestaltung beschränkt. Insbesondere kann er anstelle oder ergänzend zur Bohrwerkzeugmaschine 48 ein oder mehrere andere elektrische Werkzeugmaschinen und / oder ein oder mehrere weitere Vorrichtungen zur Erledigung von Bauaufgaben, insbesondere zur Erledigung von Inspektionsaufgaben, ein Messwerkzeug wie beispielsweise einen Bildsensor und / oder einen Längenmesser, beispielsweise einen Laufzeitdistanzmesser oder ein LIDAR, ein Schneidwerkzeug, ein Bohrwerkzeug, ein Schleifwerkzeug oder ein anderes zur Erledigung von Bauaufgaben geeignetes Werkzeug umfassen.

Der Bauroboter 10 ist zur Ausführung von Bauaufgaben, insbesondere von Bohrarbeiten in Decken und Wänden, auf einer Baustelle, beispielsweise auf einer Hochbaubaustelle, ausgebildet. Neben dem Manipulator 18 zur Ausführung der dem Bauroboter 10 zugeordneten Bauaufgaben, weist er eine innerhalb des Gehäuses 14, insbesondere im Steuerraum 16, angeordnete Steuereinheit 38 auf. Die Steuereinheit 38 umfasst einen Mikrocontroller **52.**

Die Steuereinheit 38 ist mit ausführbarem Programmcode **56** ausgestattet, der in einer Speichereinheit **54** des Mikrocontrollers 52 ausführbar abgelegt ist.

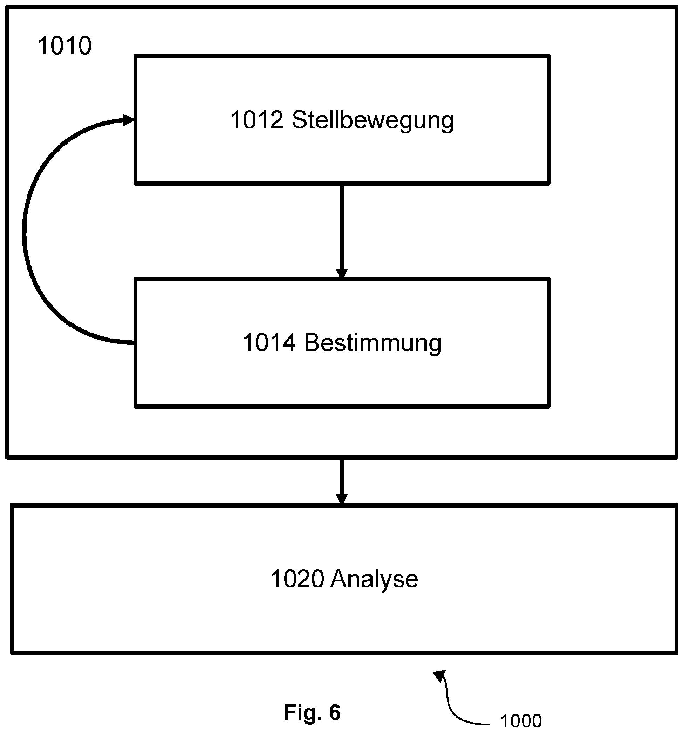

Der Programmcode 56 ist derart eingerichtet, dass der Bauroboter 10 bei Ausführung des Programmcodes 56 auf dem Mikrocontroller 52 eine Kalibrierung des Manipulators 18 gemäß dem im Zusammenhang mit Fig. 6 beschriebenen Verfahren durchführt.

Die Steuereinheit 38 weist ferner eine Kommunikationsschnittstelle **58** zur Kommunikation mit einem entfernten Rechnersystem auf.

Da die Steuereinheit 38, der Mikrocontroller 52 mit der Speichereinheit 54 und dem Programmcode 56 und der Kommunikationsschnittstelle 58 im Steuerraum 46 und damit innerhalb des Gehäuses 44 angeordnet sind, sind diese einschließlich dem Steuerraum 46 in Fig. 4 lediglich schematisch dargestellt.

Weiter weist der Bauroboter 10 eine Anzeigeeinheit **60** auf, die als Touchscreen ausgebildet ist. Die Anzeigeeinheit 60 ist mit der Steuereinheit 38 verbunden. Über die Anzeigeeinheit 60 ist die Steuereinheit 38 bedienbar. Alternativ oder ergänzend kann die Steuereinheit 38 und damit der Bauroboter 10 auch fernsteuerbar sein, insbesondere durch Fernsteuerung über die Kommunikationsschnittstelle 58.

Am Endeffektor 16 ist eine Lokalisationskennzeichnung 36, vorzugsweise relativ zur Bohrwerkzeugmaschine 48 starr, angeordnet. Die Lokalisationskennzeichnung 36 kann der vorangehend in Zusammenhang mit Fig. 3 beschriebenen Lokalisationskennzeichnung 36 entsprechen.

Ein dem vorangehend beschriebenen Reflexionselement entsprechendes Reflexionselement 40 ist ebenfalls am Endeffektor 16 angeordnet. Denkbar ist auch, dass die Lokalisationskennzeichnung 36 als Teil und / oder nach Art des Reflexionselements 40 ausgebildet ist.

Eine Kamera 34 ist an der mobilen Plattform 12 angeordnet. Sie ist so eingerichtet, insbesondere derart angeordnet und / oder mit einem derartigen Sichtfeld ausgestattet, dass die Lokalisationskennzeichnung 36 zumindest bei wenigstens zwei verschiedenen, vorzugsweise bei allen in Frage kommenden, Stellungen des Manipulators 18, im Sichtfeld der Kamera 34 ist.

Die Kamera 34 und die Lokalisationskennzeichnung 36 bilden somit eine zumindest teilweise (wegen der Kamera 34) an der mobilen Plattform 12 angeordnete optische Sensorik **62,** die eingerichtet ist, eine Position und / oder Stellung des Endeffektors 16 relativ zur mobilen Plattform 12 zu erfassen.

Anhand von mit der Kamera 34 gesammelten Bilddaten und mittels des Programmcodes 56 und unter Verwendung der optischen Sensorik 62 kann die Steuereinheit 38 somit eine Position und / oder eine Lage des Manipulators 18 bzw. des Endeffektors 16, insbesondere eines am Manipulator 18 angeordneten Werkzeugs, hier der Bohrwerkzeugmaschine 48, relativ zur mobilen Plattform 12 bestimmen.

Eine Lage der mobilen Plattform 12 lässt sich mittels eines Lagesensors in Form eines Beschleunigungssensors **42** ermitteln. Insbesondere können Winkeldaten wie beispielsweise Roll-, Nick- oder Gierwinkel der mobilen Plattform 12 mittels des Beschleunigungssensors 42 gemessen werden.

Der Programmcode 56 und damit die Steuereinheit 38 sind eingerichtet, mittels dieser Winkeldaten des Beschleunigungssensors 42 je nach Bedarf Kalibrierungsdaten zu modifizieren und / oder die Steuerung des Manipulators 18 zur Erreichung einer gewünschten Stellung geeignet zu korrigieren.

Der Bauroboter 10, insbesondere der Manipulator 18, weist ferner eine nichtoptische Sensorik **64** auf. Diese ist ebenfalls in Fig. 4 lediglich schematisch dargestellt. Sie ist eingerichtet, Stellungen sowie Stellungsänderungen der Gelenke des Manipulators 18 sowie dessen Hubvorrichtung 22 zu messen.

Der Programmcode 56 und damit die Steuereinheit 38 sind eingerichtet, auch mittels der nichtoptischen Sensorik 64 wenigstens eine Position und / oder eine Lage des Manipulators 18 und / oder Bohrwerkzeugmaschine 48 zu bestimmen. Somit ist denkbar, insbesondere bei Sichtverbindung zwischen der Lokalisationskennzeichnung 36 und der Kamera 34 die Bestimmung mittels der nichtoptischen Sensorik 64 mithilfe der optischen Sensorik 62 zu kalibrieren. Beispielsweise zur Ausführung einer Bauarbeit kann dann der Manipulator 18 unter Verwendung von Daten der so kalibrierten nichtoptischen Sensorik 64 durch die Steuereinheit 38 gesteuert werden.

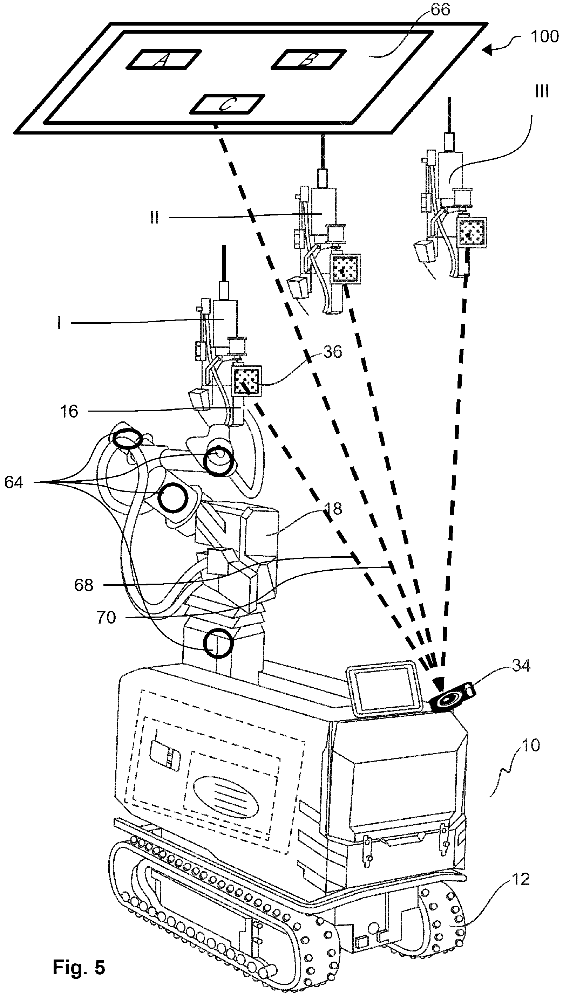

**Fig. 5** zeigt einen weiteren Bauroboter 10 mit einer fahrbaren Plattform als mobile Plattform 12. Diese Ausführungsform kann, soweit im Folgenden nicht anders beschrieben, der vorangehend beschriebenen Ausführungsform gemäß Fig. 4 entsprechen.

Bei diesem Bauroboter 10 kann, zumindest zur Kalibrierung des Manipulators 18, auf einen dem Beschleunigungssensor 42 (Fig. 4) entsprechenden Beschleunigungssensor verzichtet werden, wobei dennoch eine hohe Kalibrierungsgüte erreichbar ist.

Zu erkennen ist in Fig. 5 eine externe Lokalisationskennzeichnung **66.** Auch die externe Lokalisationskennzeichnung 66 kann ein oder mehrere Passermarken, beispielsweise in Form von AruCo-Markern aufweisen. Beispielhaft sind drei Passermarken **A, B, C** abgebildet.

Die externe Lokalisationskennzeichnung 36 ist separiert vom Bauroboter 10 angeordnet. Sie kann sich beispielsweise an einer Decke **100** einer Baustelle, auf der der Bauroboter 10 eingesetzt werden soll, befinden. Grundsätzlich kann die externe Lokalisationskennzeichnung 66 ein oder mehrere der Merkmale der Lokalisationskennzeichnung 36 aufweisen. Vorzugsweise ist die externe Lokalisationskennzeichnung 66 erheblich größer ausgebildet. Sie kann beispielsweise Abmessungen in der Größenordnung von 10° x 10° m² aufweisen, wohingegen die Lokalisationskennzeichnung 36 Abmessungen in der Größenordnung von beispielsweise 10° x 10° cm² aufweisen kann.

Sowohl die Lokalisationskennzeichnung 36 als auch die externe Lokalisationskennzeichnung 66 befinden sich vorzugsweise im Sichtfeld der Kamera 34. Die Kamera 34 kann somit erste Bilddaten **68** der Lokalisationskennzeichnung 36 und zweite Bilddaten **70** der externen Lokalisationskennzeichnung 66 aufzeichnen.

Schematisch ist in Fig. 5 ferner dargestellt, dass der Manipulator 18 mitsamt dem Endeffektor 16 in verschiedene Stellungen **I, II, III** gesteuert werden kann, wobei weiterhin die Lokalisationskennzeichnung 36 und weiterhin auch die relativ zu einer Umgebung des Bauroboters 10 ortsfest ruhende externe Lokalisationskennzeichnung 66 im Sichtfeld der Kamera 34 bleiben.

Auch bei diesem Bauroboter kann eine Kalibrierung des Manipulators 10 und insbesondere seiner nichtoptischen Sensorik 64 entsprechend dem nachfolgend beschriebenen Verfahren erfolgen.

Dazu zeigt Fig. 6 ein Verfahren **1000** zur Kalibrierung eines Bauroboters nach Art der vorangehend beschriebenen Bauroboter. Das Verfahren 1000 wird nachfolgend unter Bezugnahme auf die vorangehend eingeführten Bezugszeichen näher erläutert.

Das Verfahren soll am Beispiel erfolgen, dass der Manipulator 18 des Bauroboters 10 ausgetauscht worden sein und daher zu kalibrierende Fertigungstoleranzen zwischen Messwerten der nichtoptischen Sensorik 64 bzw. zugehörigen gewünschten Stellungen des Manipulators 18 und den tatsächlich angefahrenen Positionen und / oder Lagen des Manipulators 18 bestehen.

Denkbar ist auch alternativ oder ergänzend, dass die Kalibrierung nicht nur hinsichtlich der Stellung des eigentlichen Manipulators 18, sondern auch oder alternativ beispielsweise hinsichtlich der Stellung eines Werkzeugs, das beispielsweise mithilfe des Endeffektors 16 am Manipulator 18 angeordnet ist, beispielsweise hinsichtlich der Bohrwerkzeugmaschine 48, erfolgen kann.

Beispielhaft wird weiter angenommen, dass zur Kalibrierung lediglich drei Stellungen, insbesondere die Stellungen I, II und III, verwendet werden.

In einer Messphase **1010** wird nacheinander mithilfe von Stellbewegungen **1012** der Manipulator 18 in eine, insbesondere bislang noch nicht verwendete, der Stellungen I, II oder III gebracht.

Bei Erreichen der jeweiligen Stellung I, II oder III erfolgt jeweils eine Bestimmung **1014** der Position und der Lage des Manipulators 18 relativ zur mobilen Plattform 12 unter Verwendung der optischen Sensorik 62. Zusätzlich werden in jeder der Stellungen I, II oder III die Messwerte der (zu kalibrierenden) nichtoptischen Sensorik 64 erfasst.

Dies wird solange wiederholt, bis alle zu analysierenden Stellungen, im Beispiel also insgesamt drei Stellungen, derart angefahren und deren Position und Lage bestimmt worden sind.

Zur Bestimmung 1014 können erste Bilddaten 68 der Lokalisationskennzeichnung 36 durch die Kamera 34 aufgezeichnet werden. Die ersten Bilddaten 68 können dann mithilfe einer Bildverarbeitung durch die Steuereinheit 38 ausgewertet werden und dadurch Distanz- und Orientierungsdaten zur Lage und zur Position der Lokalisationskennzeichnung 36 relativ zur Kamera 34, damit Daten zur Lage und Position des Manipulators 18 relativ zur mobilen Plattform 12 gewonnen werden. Zur Bestimmung absoluter Distanzen und Winkel können insbesondere bekannte Strecken, beispielsweise bestimmte Abmessungen, der Lokalisationskennzeichnung 36 der Abschätzung zugrunde gelegt werden. Beispielsweise kann mithilfe eines geeignet trainierten Deep Learning-Algorithmus zunächst die Lokalisationskennzeichnung 36 identifiziert werden. Aus der Art und Weise der perspektivischen Verzerrung der Abbildung der Lokalisationskennzeichnung 36 innerhalb der ersten Bilddaten 68 können dann eine relative Lage und eine relative Entfernung zur Kamera 34 abgeleitet werden. Aus diesen wiederum lassen sich die gewünschten Distanz- und Orientierungsdaten ableiten.

Sofern ein Lagesensor verfügbar ist, können dessen Messdaten bei der Bestimmung 1014 mitprotokolliert werden.

Sofern eine externe Lokalisationskennzeichnung 66 verfügbar ist, können mit der Kamera 34 auch zweite Bilddaten 70 gesammelt werden, in denen die externe Lokalisationskennzeichnung 66 abgebildet ist. Denkbar ist, dass, im Falle, dass sowohl die Lokalisationskennzeichnung 36 als auch die externe Lokalisationskennzeichnung 66 bereits beide in den ersten Bilddaten 68 zumindest in ausreichendem Umfang abgebildet sind, die ersten Bilddaten 68 auch als zweite Bilddaten 70 zu verwenden. Die Auswertung der zweiten Bilddaten 70 kann dabei analog zur Auswertung der ersten Bilddaten 68, hier lediglich bezogen auf die externe Lokalisationskennzeichnung 66, erfolgen.

In einer anschließenden Analyse **1020** werden dann die gesammelten Lage- und Positionsdaten der optischen Sensorik 62 einerseits und der nichtoptischen Sensorik 66 andererseits miteinander verglichen. Aus dem Vergleich können anschließend die gewünschten Kalibrierungsdaten abgeleitet werden.

Soweit Winkeldaten des Lagesensors verfügbar sind, können diese in die Kalibrierungsdaten integriert werden, um entsprechende Kippbewegungen der mobilen Plattform 12 bei einer späteren Steuerung des Manipulators 38 zusätzlich zu kompensieren.

Wird eine externe Lokalisationskennzeichnung 66 verwendet, können Winkeldaten zu während der Kalibrierung erfolgenden Kippbewegungen auch ermittelt werden, indem Abweichungen der relativen Lagen und der Positionen der externen Lokalisationskennzeichnung 66, also zwischen verschiedenen Sätzen von zweiten Bilddaten 70, ausgewertet werden. Auch mit diesen Daten kann eine zusätzliche Kompensation von Kippbewegungen der mobilen Plattform 12 erfolgen.

Die gewonnenen Kalibrierungsdaten können später verwendet werden, um eine Steuerung des Manipulators 18 auf Basis von Messwerten der nichtoptischen Sensorik 64 zu modifizieren. Insbesondere kann die Steuerung derart modifiziert werden, dass eine unter Verwendung der nichtoptischen Sensorik 64 erreichte Zielstellung einer tatsächlich gewünschten Stellung entsprechend von Messwerten auf Basis der optischen Sensorik 62 als "Ground Truth" entspricht. Mit anderen Worten können die Kalibrierungsdaten dann verwendet werden, um zuvor festgestellte Fertigungstoleranzen zu kompensieren.

Bei einer Variante des Verfahrens 1000 ist es auch denkbar, nacheinander Stellungen mit dem Manipulator 18 anzufahren, wobei die Stellungen bestimmten Konstellationen in Bezug auf die exteme Lokalisationskennzeichnung 66 entsprechen. Solche Konstellationen könnten z. B. sein, dass eine Werkzeugspitze der Bohrwerkzeugmaschine 48 eine der Passermarken A, B, C in einer spezifischen Weise berührt. Um diese Stellungen anzufahren, kann mithilfe der Kamera 34 die Werkzeugspitze überwacht werden und mithilfe von laufender Bildverarbeitung durch die Steuereinheit 38 der Manipulator 38 entsprechend gesteuert werden, bis durch eine solche optische Überwachung erkannt wird, dass die gewünschte Konstellation erreicht ist. Dann können die Position und die Lage des Manipulators 18 anhand den von der nichtoptischen Sensorik 64 gelieferten Messwerten bestimmt werden. Anhand definierter Abstände und / oder Geometrien der Konstellationen, insbesondere der Passermarken, zueinander und durch Vergleich mit den zugehörigen Messwerten der nichtoptischen Sensorik 64 können dann wiederum Abweichungen ermittelt und hieraus Kalibrierungsdaten abgeleitet werden.

### Bezugszeichenliste

- 10: Bauroboter
- 12: mobile Plattform
- 14: Endeffektor-Plattform
- 16: Endeffektor
- 18: Manipulator
- 20: Markierstift
- 22: Hubvorrichtung
- 24: Kontaktelement
- 26: Motor
- 28: Stützarm
- 30: Befestigungsvorrichtung
- 32: Beleuchtung
- 34: Kamera
- 36: Lokalisationskennzeichnung
- 38: Steuereinheit
- 40: Reflexionselement
- 42: Beschleunigungssensor
- 44: Gehäuse
- 46: Steuerraum
- 48: Bohrwerkzeugmaschine
- 50: Staubabsaugungsvorrichtung
- 52: Mikrocontroller
- 54: Speichereinheit
- 56: Programmcode
- 58: Kommunikationsschnittstelle
- 60: Anzeigeeinheit
- 62: optische Sensorik
- 64: nichtoptische Sensorik
- 66: exteme Lokalisationskennzeichnung
- 68: erste Bilddaten
- 70: zweite Bilddaten
- 100: Decke
- 1000: Verfahren
- 1010: Messphase
- 1012: Stellbewegung
- 1014: Bestimmung
- 1020: Analyse
- A, B, C: Passermarke
- I, II, III: Stellung

## Patentansprüche

1. **Verfahren (1000)** zur Kalibrierung eines Bauroboters (10) umfassend eine mobile Plattform (12) und einen relativ zur mobilen Plattform (12) beweglichen Manipulator (18) und eine zumindest teilweise an der mobilen Plattform (12) angeordnete und / oder ausgebildete optische Sensorik (62), und eine Steuereinheit (38), die eingerichtet ist, unter Verwendung der optischen Sensorik (62) eine Position und / oder eine Lage des Manipulators (18), insbesondere eines am Manipulator (18) angeordneten Werkzeugs, relativ zur mobilen Plattform (12) zu bestimmen, wobei Kalibrierungsdaten zur Kalibrierung von Stellbewegungen (1012) des Manipulators (18) erzeugt werden, in dem der Manipulator (18) in wenigstens eine erste und anschließend in eine zweite Stellung (I, II, III) gebracht wird, und bei Erreichen der jeweiligen Stellung (I, II, III) jeweils wenigstens eine Position und / oder Lage des Manipulators (18), insbesondere eines am Manipulator (18) angeordneten Werkzeugs, relativ zur mobilen Plattform (12), unter Verwendung der zumindest teilweise an der mobilen Plattform (12) des Bauroboters (10) angeordneten und / oder ausgebildeten optischen Sensorik (62) bestimmt werden.

2. Verfahren nach dem vorhergehenden Anspruch, **dadurch gekennzeichnet, dass** wenigstens eine der Positionen und / oder Lagen bestimmt wird, indem erste Bilddaten (68) einer am Manipulator (18) angeordneten und / oder ausgebildeten Lokalisationskennzeichnung (36) und zweite Bilddaten (70) einer in einer Umgebung des Bauroboters (10) angeordneten und / ausgebildeten externen Lokalisationskennzeichnung (36), insbesondere von der mobilen Plattform (12) aus, aufgezeichnet und ausgewertet werden.

## Claims

1. Method (1000) for calibrating a construction robot (10), comprising a mobile platform (12) and a manipulator (18) which is movable relative to the mobile platform (12), and an optical sensor system (62) arranged and/or formed at least partly on the mobile platform (12), and a control unit (38) which is configured to determine, using the optical sensor system (62), a position and/or orientation of the manipulator (18), in particular a tool arranged on the manipulator (18), relative to the mobile platform (12), wherein calibration data are generated for calibrating adjustment movements (1012) of the manipulator (18), in that the manipulator (18) is brought into at least one first and then a second situation (I, II, III), and when the respective situation (I, II, III) has been reached, in each case at least one position and/or orientation of the manipulator (18), in particular a tool arranged on the manipulator (18), relative to the mobile platform (12) is determined using the optical sensor system (62) at least partially arranged and/or formed on the mobile platform (12) of the construction robot (10).

2. Method according to the preceding claim, **characterized in that** at least one of the positions and/or orientations is determined **in that** first image data (68) of a location marking (36) arranged and/or formed on the manipulator (18), and second image data (70) of an external location marking (36) arranged and/or formed in a vicinity of the construction robot (10), in particular from the mobile platform (12), are recorded and evaluated.

## Revendications

1. Procédé (1000) d'étalonnage d'un robot de construction (10) comprenant une plateforme mobile (12), un manipulateur (18) mobile par rapport à la plateforme mobile (12), un système de capteurs optiques (62) disposé et/ou formé au moins partiellement sur la plate-forme mobile (12) et une unité de commande (38) qui est conçue pour déterminer, à l'aide du système de capteurs optiques (62), une position et/ou un emplacement du manipulateur (18), notamment d'un outil disposé sur le manipulateur (18), par rapport à la plateforme mobile (12), des données d'étalonnage étant générées pour étalonner des mouvements de réglage (1012) du manipulateur (18), procédé dans lequel le manipulateur (18) est amené dans au moins une première puis une deuxième position (I, II, III), et après avoir atteint la position respective (I, II, III) au moins une position et/ou un emplacement du manipulateur (18), notamment d'un outil disposé sur le manipulateur (18), par rapport à la plateforme mobile (12), étant déterminés à l'aide du système de capteurs optiques (62) disposé et/ou formé au moins partiellement sur la plate-forme mobile (12) du robot de construction (10).

2. Procédé selon la revendication précédente, **caractérisé en ce qu'**au moins une des positions et/ou un des emplacements sont déterminés par acquisition et évaluation de premières données d'image (68) d'une caractérisation de localisation (36) disposée et/ou formée sur le manipulateur (18) et de deuxièmes données d'image (70) d'une caractérisation de localisation extérieure (36) disposée et/formée dans un environnement du robot de construction (10), en particulier à partir de la plate-forme mobile (12).
